# EUROPEAN PATENT APPLICATION

(11) **EP 1 791 320 A2**
(43) Date of publication of application: **30.05.2007**
(21) Application number: 06124526.2
(22) Date of filing: 22.11.2006
(51) Int. Cl.: H04L 29/06, G06F 17/30

(54) **Method and apparatus of supporting multi-object transport protocols**

(30) Priority: 24.11.2005 KR 20050113080
(71) Applicant: Samsung Electronics Co., Ltd, Suwon-si, Gyeonggi-do 442-742 (KR)
(72) Inventor: Lee, Suk-bong, Gyeonggi-do (KR); Oh, Yun-sang, Gangnam-gu, Seoul (KR); Jung, Kyung-im, Bundang-gu, Seongnam-si, Gyeonggi-do (KR); Sim, Sang-gyoo, Yeongtong-gu, Suwon-si, Gyeonggi-do (KR)
(74) Representative: Robinson, Ian Michael

(57) **Abstract**

A method and apparatus of supporting multi-object transport protocols are provided. The method includes generating a first request message based on a first object transport protocol (105) by request of an application (101); translating the first request message into a second request message based on a second object transport protocol (205) supported by a slave device (200); and transporting the second request message to the slave device (200).

## Description

The present invention relates to an object transport protocol, and more particularly, to a method and apparatus of supporting multi-object transport protocols.

In order to implement data transport between two different devices, interoperable file systems and use of a network protocol, both of which are device- or media-dependent approaches, are widely adopted.

Meanwhile, to enable data transport between two devices and control the data transport, a common communication protocol may also be employed. The use of the common communication protocol allows device- or media-independent transport in a higher level than the interoperable file systems or the network protocol. The common communication protocol may be exemplified by Media Transfer Protocol (MTP) or Picture Transfer Protocol (PTP). Since the MTP and PTP have standards defining a general-purpose method, it is possible to control other devices without employing a device-dependent method. However, legacy devices having either low computation capability or storage capacity cannot provide suitable support for implementation of the device-dependent method.

Particularly, in recent years, to facilitate storage and distribution of encrypted digital contents or rights objects, the use of memory sticks or multimedia cards (MMCs) are becoming prevalent in the field of digital right management (DRM) technology. However, since portable storage devices have limited computation capability, compared to devices playing back digital contents, they cannot achieve appropriate communication with an application run on another device using a stand-alone protocol, that is, a common communication protocol, such as MTP or PTP.

According to the present invention there is provided an apparatus and method as set forth in the appended claims. Preferred features of the invention will be apparent from the dependent claims, and the description which follows.

Some of the exemplary embodiments of the present invention address the above disadvantages and other disadvantages not described above. Also, the present invention is not required to overcome the disadvantages described above, and an exemplary embodiment of the present invention may not overcome any of the problems described above.

One aspect of the present invention provides facilitated implementation of object management operable with a legacy device irrespective of object transport protocols.

According to an exemplary embodiment of the present invention, there is provided a method of supporting multi-object transport protocols, the method including generating a first request message based on a first object transport protocol by request of an application, translating the first request message into a second request message based on a second object transport protocol supported by a slave device, and transporting the second request message to the slave device.

According to another exemplary embodiment of the present invention, there is provided a master device including an application module which generates a first request message based on a first object transport protocol, a translation module which translates the first request message into a second request message based on a second object transport protocol supported by a slave device, and a device interface module which transports the second request message to the slave device.

The above and other aspects of the present invention will become more apparent by describing in detail exemplary embodiments thereof with reference to the attached drawings in which:
Figure 1 is a schematic diagram illustrating a stack structure of a master device and a slave device according to an exemplary embodiment of the present invention;
Figure 2 is a detailed block diagram of the master device 100 according to an exemplary embodiment of the present invention; and
Figure 3 is a flowchart illustrating a method of supporting multiple object transport protocols according to an exemplary embodiment of the present invention.

Aspects of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The exemplary embodiments are described in detail below to explain the present invention by referring to the figures.

Following are brief definitions of terms used throughout the specification. The terms used in the description of the invention herein are for the purpose of describing particular exemplary embodiments only and are not intended to be limiting of the invention.

### - Master device

A master device is connectable to a slave device and transmits queries to the slave device to enable transporting, searching, or acquisition of a particular object. Exemplary master devices are portable content players such as mobile phones, PDAs or MP3 players, fixed content players such as desk-top computers or digital TVs, and so on. When a master device executes a digital right management (DRM) function, the master device uses a rights object (RO) to play a content.

### - Slave device

A slave device includes a non-volatile memory such as a flash memory which data can be written to, read from, and deleted from, which has a data computation capability, and which can be easily connected to and disconnected from a master device. Exemplary examples of such a slave device include smart media, memory sticks, compact flash (CF) cards, xD cards, and Multimedia cards (MMCs). However, the slave device is not limited to the illustrated examples and may be a device of a type similar to the master device. The slave device can execute jobs in response to the queries transmitted from the master device.

### - Object

An object is a wide variety of data that can be stored in a device and communicated with other devices, including various contents such as a moving image, a still image, an audio file or a game, a text, a document, and a rights object used in DRM, among others.

### - Object transport protocol

An object transport protocol is a protocol used when a master device or a slave device intends to process an object, for example, to transport, search or acquire an object. The object transport protocol can be classified into a device-dependent protocol and a stand-alone protocol.

### - Module

A module is a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Terms specifically defined above will be described below when necessary.

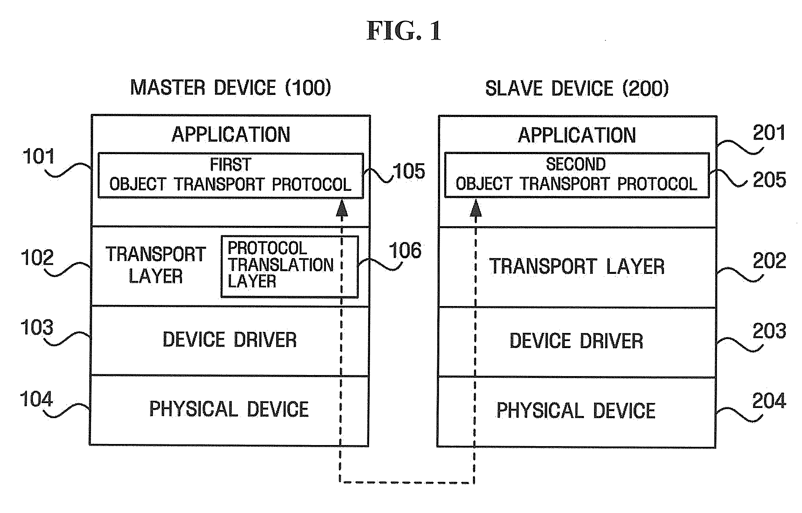

Figure 1 is a schematic diagram illustrating a stack structure of a master device 100 and a slave device 200 according to an exemplary embodiment of the present invention.

Referring to Figure 1, the master device 100 includes a physical device 104, a device driver 103 which is responsible for accessing the physical device 104, a transport layer 102 which is responsible for transmission/reception of messages or data to/from the slave device 200, and an application 101 requesting the slave device 200 to transmit or receive an object and processing a job corresponding to a response from the slave device 200.

The slave device 200 includes a physical device 204, a device driver 203, a transport layer 202, and an application 201, which perform functions corresponding to those of the physical device 104, the device driver 103, the transport layer 102, and the application 101, respectively. This suggests, however, that the corresponding constituents of the master device 100 and the slave device 200 are identical with each other.

Here, a first object transport protocol 105 is used for the application 101 of the master device 100. The first object transport protocol 105 is a device-dependent protocol. If another device supporting the first object transport protocol 105 exists, the application 101 processes the job of the first object transport protocol 105 irrespective of differences in the subordinate structure between the master device 100 and the other device, thereby processing the job of the first object transport protocol 105. In other words, even if the master device 100 stores an object in a data format different from the other device, the unified format data can be provided to the master device 100 and the other device through the first object transport protocol 105. Examples of the first object transport protocol 105 include a MTP, and a PTP, among others.

Meanwhile, a second object transport protocol 205 is used for the application 201 of the slave device 200. While the present exemplary embodiment has illustrated that the second object transport protocol 205 is a device-dependent protocol, the invention is not limited thereto and the second object transport protocol 205 may also be a device-independent protocol. Compared to the master device 100, the slave device 200 may have insufficient system resources in view of computation capability or storage capacity. In such an instance, the slave device 200 may be incapable of supporting the first object transport protocol 105 used by the master device 100. A second object transport protocol 205 is a protocol used for object processing jobs of the slave device 200 and may be exemplified by 'SecureMMC Specification 'proposed by Samsung Electronics in 2004.

In a case where the slave device 200 is incapable of supporting the first object transport protocol 105 used by the master device 100, even if a message requesting for the application 101 is sent from the master device 100, the slave device 200 cannot process the job responsive to the request message. Thus, the transport layer 102 of the master device 100 may further include a protocol translation layer 106. The protocol translation layer 106 translates messages sent from the first object transport protocol 105 and the second object transport protocol 205. Specifically, the protocol translation layer 106 translates a message based on the first object transport protocol 105 into a message based on the second object transport protocol 205 and also translates a message based on the second object transport protocol 205 into a message based on the first object transport protocol 105. An object processing job between the application 101 of the master device 100 and the application 201 of the slave device 200 may be implemented through the translation procedure.

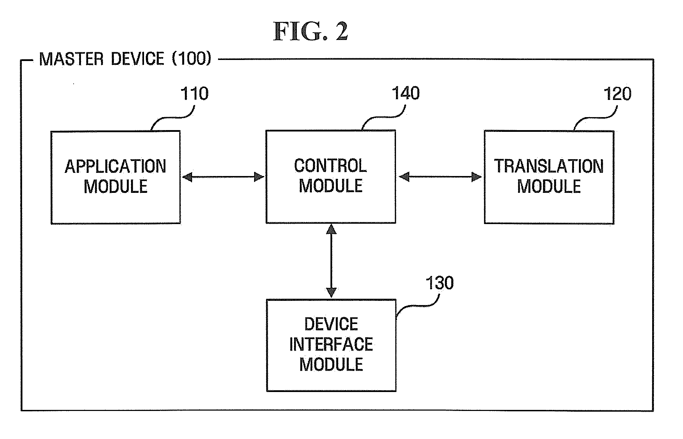

Figure 2 is a detailed block diagram of the master device 100 according to an exemplary embodiment of the present invention. The master device 100 includes an application module 110, a translation module 120, a device interface module 130, and a control module 140.

The application module 110 executes processing jobs for an object using a first object transport protocol (105 of Figure 1). For example, the application module 110 may execute a job of exchanging image files with other device using PTP as the first object transport protocol. Exemplary processing jobs may be object transport, search, acquisition, control, and the like. To this end, the application module 110 may generate a request message and an acknowledge message based on the first object transport protocol.

The device interface module 130 transmits/receives data to/from other device (e.g., the slave device 200). To this end, the device interface module 130 allows the master device 100 to be connected with other device, e.g., the slave device 200. While the master device 100 can be electrically connected with the slave device 200 through the device interface module 130 in the present invention, this is just an example, and "being connected" simply implies that the master device 200 can communicate with the other device through a wireless medium in a noncontact state.

In a case where the device connected through the device interface module 130 is the slave device 200 by which the first object transport protocol used by the application module 110 is not supported, the translation module 120 translates the request message generated by the application module 110 into a request message based on a second object transport protocol supported by the slave device 200. In addition, the translation module 120 translates the request message received from the slave device 200 into a response message based on the first object transport protocol. To this end, the translation module 120 may store information about translation, such as information about the first object transport protocol and information about the second object transport protocol.

For example, the translation module 120 may store a variety of types of messages used by the first object transport protocol and the second object transport protocol and mapping information of the corresponding messages between the both protocols. In this case, when a message based on any one of the two object transport protocols is input, the translation module 120 may output a message based on the other object transport protocol.

Meanwhile, the translation module 120 may include translation information for a plurality of object transport protocols. In this case, the translation protocol 120 may perform a translation job on messages of the first object transport protocol using translation information corresponding to the object transport protocol used by the slave device 200.

The control module 140 checks whether or not the other device connected through the device interface module 130 supports the first object transport protocol used by the application module 110. For example, the control module 140 transmits identification information of the first object transport protocol used by the application module 110 to the other device through the device interface module 130, and a response message received from the other device confirms whether the other device connected through the device interface module 130 supports the first object transport protocol or not. The confirmation job may be performed without intervention of the application module 110.

Meanwhile, the control module 140 may control functions of the respective modules 110 through 130 of the master device 100.

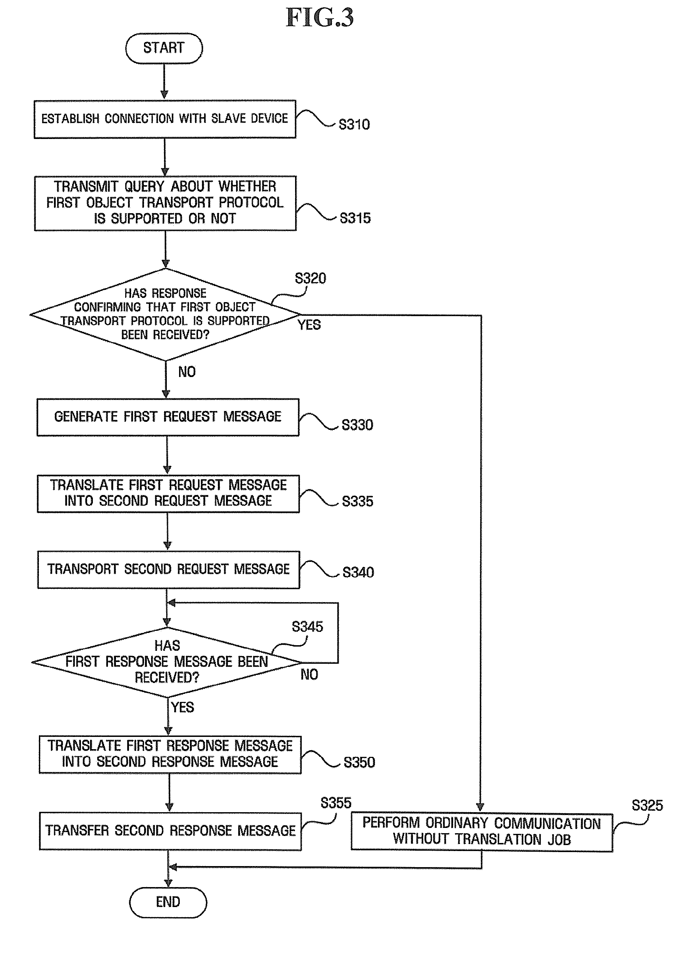

Next, the operating procedures of the master device 100 will be described will be described with reference to Figure 3.

Figure 3 is a flowchart illustrating a method of supporting multiple object transport protocols according to an exemplary embodiment of the present invention.

First, when the device interface module 130 is connected with the slave device 200 in operation S310, the control module 140 transmits a query about whether the first object transport protocol used by the application module 110 is supported or not to the slave device 200 through the device interface module 130 in operation S315. For example, the control module 140 may transmit an identification code, by which the first object transport protocol can be identified, to the slave device 200 through the device interface module 130.

Thereafter, if the device interface module 130 receives a response from the slave device 200 in operation S320 that the first object transport protocol is supported, the control module 140 controls an ordinary communication procedure to be executed without passing through the translation module 120 in operation S325.

However, if the device interface module 130 receives a response from the slave device 200 that the first object transport protocol is not supported, the control module 140 controls a communication to be executed via the translation module 120. In alternative exemplary embodiments, identification information about object transport protocol supported by the slave device 200 may be sent as the response to the query transmitted in operation S315.

In this case, if the application module 110 generates a first request message based on the first object transport protocol in operation S330, the translation module 120 translates the first request message into a second request message based on the second object transport protocol supported by the slave device 200 in operation S335. Here, the first request message includes information of same meaning with information included in the second request message.

Next, the device interface module 130 transmits the second request message to the slave device 200 in operation S340.

After receiving a first response message for the second request message in operation S345, the translation module 120 translates the first response message into a second response message based on the first object transport protocol in operation S350 and transfers the translated second response message to the application module 110 in operation S355.

Accordingly, communications for an object processing job between applications supporting different object transport protocols can be performed.

While Figure 3 illustrates that the query about whether or not the first object transport protocol is supported by the slave device 200 is transmitted before the application module 110 generates the first response message, the invention is not limited thereto and the operations S310 through S320 may be performed after the operation S330.

In an exemplary embodiment of the invention, the translation module 120 may include translation information about a plurality of object transport protocols. In this case, the response message in reply to the query of operation S315 may contain identification information about whether or not an object transport protocol is supported by the slave device 200. In this case, the translation module 120 may perform translation on a message for the first object transport protocol using one translation information element among a plurality of translation information elements, the one translation information element corresponding to the object transport protocol used by the slave device 200.

As described above, the method and apparatus of supporting multi-object transport protocols according to an exemplary embodiment of the present invention enables an object processing job to be executed with respect to a legacy device irrespective of the type of an object transport protocol.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of supporting multi-object transport protocols, the method comprising:
generating a first request message based on a first object transport protocol (105) by request of an application (101);
translating the first request message into a second request message based on a second object transport protocol (205) supported by a slave device (200); and
transporting the second request message to the slave device (200).

2. The method of claim 1, further comprising:
receiving a first response message for the second request message from the slave device (200);
translating the first response message into a second response message based on the first object transport protocol (105); and
providing the second response message to the application (101).

3. The method of claim 1 or 2, wherein the first object transport protocol (105) is a protocol allowing the application (101) to perform a processing job of an object.

4. The method of claim 3, wherein the object comprises at least one of video data, audio data, image data, a game, a text, a document, and a rights object.

5. The method of claim 3 or 4, wherein the processing job of an object comprises at least one selected from transport, search, acquisition, management, and control of the object.

6. The method of any preceding claim, wherein the first object transport protocol (105) is either Media Transfer Protocol (MTP) or Picture Transfer Protocol (PTP), and the second first object transport protocol (105) complies with the SecureMMC specification.

7. A master device (100) comprising:
an application module (110) which generates a first request message based on a first object transport protocol (105) ;
a translation module (120) which translates the first request message into a second request message based on a second object transport protocol (205) supported by a slave device (200); and
a device interface module (130) which transports the second request message to the slave device (200).

8. The master device (100) of claim 7, wherein
the device interface module (130) receives a first response message for the second request message from the slave device (200), and
the translation module (120) translates the first response message into a second response message based on the first object transport protocol (105) and provides the second response message to the application module (110).

9. The master device (100) of claim 7, wherein the first object transport protocol (105) is a protocol allowing the application module (110) to perform a processing job of an object.

10. The master device (100) of claim 9, wherein the object includes at least one of video data, audio data, image data, a game, a text, a document, and a rights object.

11. The master device (100) of claim 9 or 10, wherein the processing job of a object comprises at least one selected from transport, search, acquisition, management, and control of the object.

12. The master device (100) of any of claims 7 to 11, wherein the first object transport protocol (105) is either MTP (Media Transfer Protocol) or PTP (Picture Transfer Protocol), and the second first object transport protocol (105) complies with the SecureMMC specification.
